# EUROPEAN PATENT SPECIFICATION

(11) **EP 2 735 683 B1**
(45) Date of publication and mention of the grant of the patent: **18.01.2017**
(21) Application number: 12868676.3
(22) Date of filing: 26.10.2012
(51) Int. Cl.: E05F 15/43, H04B 10/00

(54) **AUTOMATIC DOOR SYSTEM HAVING A SECURITY SENSOR DEVICE AND METHOD FOR USING SAID SYSTEM**
AUTOMATISCHES TÜRSYSTEM MIT SICHERHEITSSENSOR UND VERFAHREN ZUR BENUTZUNG DIESES SYSTEMS
SYSTÈME DE PORTE AUTOMATIQUE À DISPOSITIF CAPTEUR DE SÉCURITÉ ET PROCÉDÉ POUR L'UTILISATION DUDIT SYSTÈME

(30) Priority: 14.02.2012 ES 201230231
(43) Date of publication of application: 28.05.2014
(73) Proprietor: JCM Technologies, S.A., 08500 Vic (Barcelona) (ES)
(72) Inventor: RENALIAS ZUERAS, Ricard, E-08242 Manresa (Barcelona) (ES); BERINGUES ALGUE, Jordi, E-17003 Girona (ES)
(74) Representative: Durán-Corretjer, S.L.P.
(86) International application number: PCT/ES2012/070751
(87) International publication number: WO 2013/121055

(56) References cited:
- WO-A1-2011/088514
- DE-B3-102008 056 508
- ES-A1- 2 285 953
- US-A- 4 953 608
- US-A1- 2004 187 387
- US-A1- 2005 133 699
- US-A1- 2005 133 699
- US-A1- 2006 204 206
- US-B1- 6 469 464
- DATABASE WPI Week200981, Derwent Publications Ltd., London, GB; AN 2009-S01812, XP003032822 RETRIEVED & CN 101 582 717 A (NINGBO HENGBO COMM EQUIPMENT C - NINGBO HENGBO COMM EQUIPMENT CO LTD) 18 November 2009

## Description

The present invention relates to an automatic door control system, for example for garages, having a safety strip for detecting collisions during the operation of the door, and also a method for controlling a door comprising a safety strip.

Official regulations on garage doors limit the force exerted by the automatic door in the event of collision with an object or person, to prevent that object or person from being trapped.

To achieve effective limitation of force, a pressure sensor mechanism, known as a "safety strip" is placed on at least one of the ends of the moveable parts of the door. These safety strip(s) have to be connected to the control panel, to inform the system of the occurrence of collisions.

There are many known mechanisms for detecting obstacles for automatic doors, for example, using the emission of an infrared beam; however, these mechanisms are characterised by their high power consumption.

For example, document US2006/0204206 discloses a method in which an infrared emitter produces a signal, said signal is detected by a receiver and, once this signal is received, a signal is fed back to the emitter in order for it to send another signal. In this way the emitter can check that the signal sent matches the signal received and does not correspond to interference. Moreover, this feedback signal can also function as a signal for calibrating the power of the infrared beam.

This implementation permits a diagnostic capability, since the receiver can distinguish whether the failure to receive infrared beams is due to a signal emission fault (for example, the battery having run down) or because a collision has occurred.

Nonetheless, the type of system proposed in that document has the drawback that signals have to be generated constantly, to allow status verification, which proves particularly inefficient in applications in which both the emitter and the receiver have a power supply, for example, using batteries. Consequently, it proves very advantageous to have a system offering a fault diagnosis capability, as a safety feature to determine when a collision at the door or a fault has occurred, and also having a standby state that allows the power consumption of the aforementioned system to be reduced.

Therefore, the present invention relates to an automatic door system according to claim 1, having a safety strip for a door provided with a motor and a control panel associated with said motor, comprising:
- a stationary wireless signal receiver connected to the control panel;
- at least one sensor device located at the moveable end of the door;
- at least one controller for the sensor device, communicating wirelessly with the stationary receiver;
   wherein the sensor device comprises:
   - a signal emitter; and
   - a receiver for the signal generated by the emitter for detecting at least one representative parameter of the door;
      wherein the controller activates at least the emitter via a trigger signal, said trigger signal being a signal independent from the signal to be transmitted by the emitter. Both the emitter and the receiver are connected to the controller, and said sensor device is a safety strip.

The trigger signal is generated periodically at configurable time intervals, and the controller can be located outside the sensor device, forming part of a different device.

The controller activates at least the emitter via the trigger signal. In particular embodiments, this activation involves changing from a standby mode to a normal power consumption mode. In other embodiments, the electrical power for the emitter and/or receiver comes from the controller.

More preferably, the emitter is a generator of a polarised light beam, for example an infrared light beam.

Even more preferably, the controller comprises a radio-frequency emitter operating in the ISM band, particularly in the 870 MHz frequency.

On the other side, both the receivers and the RF emitters described in the present invention could be transceivers and have bidirectional communication among themselves.

In a particular embodiment, both the sensor device and the controller are supplied with power by batteries.

In addition, the present invention also relates to a method for operating an automatic door system according to claim 14 having a safety strip for a door provided with a motor and a control panel associated with said motor, said automatic door system comprising:
- a stationary wireless signal receiver connected to the control panel;
- at least one sensor device located at the moveable end of the door;
- at least one controller for the sensor device, communicating wirelessly with the stationary receiver;
   wherein the sensor device comprises:
   - a signal emitter; and
   - a receiver for the signal generated by the emitter for detecting at least one representative parameter of the door;
      comprising the steps of
      a)emission of a signal by the emitter to the receiver;
      b)detection and analysis of the signal received by the receiver; and
      c)emission of a signal from the sensor device as a function of the signal received by the receiver;
         wherein, before step a), the controller sends a trigger signal to the emitter causing the emitter to send a signal to the receiver for detecting collisions.

The method according to the present invention comprises a step d) wherein the receiver feeds the signal received from the emitter back to the controller.

More preferably, the method comprises a step e) wherein, if the controller does not receive the feedback signal, it sends a fault signal.

The trigger signal is a periodic signal.

Moreover, the controller features a signal that controls the switching on/off of the emitter and/or the receiver.
Figure 1 shows a diagrammatic view of a system according to the present invention.
Figure 2 shows in detail the devices forming part of an embodiment according to the present invention and the connections between them when there is no obstacle located at the door.
Figure 3 shows in detail the devices forming part of an embodiment according to the present invention and the connections between them when an obstacle is encountered while the door is moving.
Figure 4 shows a block diagram explaining the operation of the sensor device.
Figure 5 shows diagrammatically the operating modes of each device.
Figure 6 shows in detail the digital signals used by a system according to the present invention.

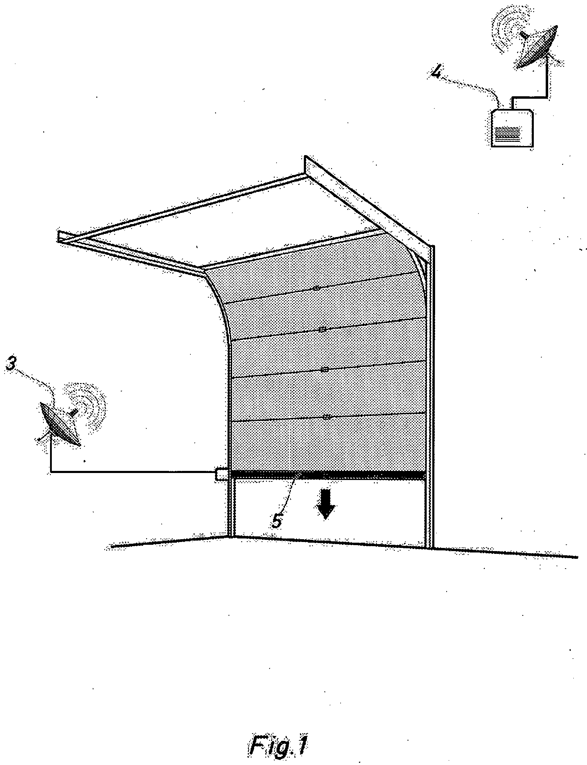

Figure 1 shows diagrammatically a device according to the present invention.

This figure shows a radio-frequency transceiver (3), comprising a controller (not shown), a sensor device (5) and a stationary radio-frequency receiver device (4), (which, in one particular embodiment, is a radio-frequency transceiver). Moreover, in this embodiment, collisions are detected at the door by means of the sensor device (5), which can be a strip that makes a digital measurement indicating whether or not the door is being blocked by an obstacle.

Alternatively, the sensor device (5) can be a strip that makes an analogue measurement of the force exerted on the door.

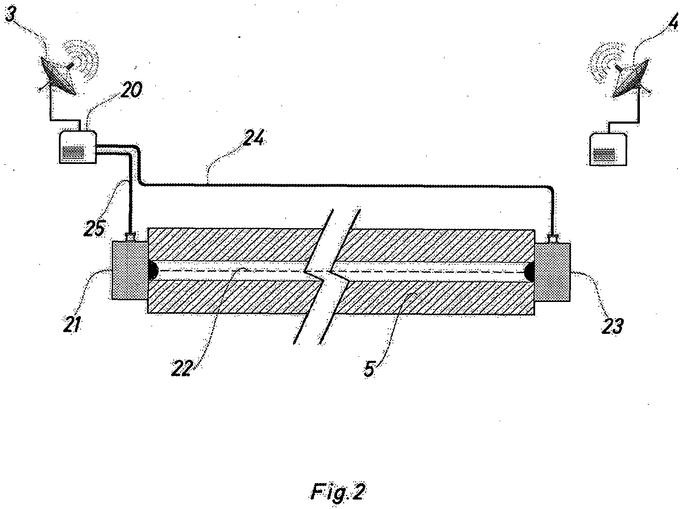

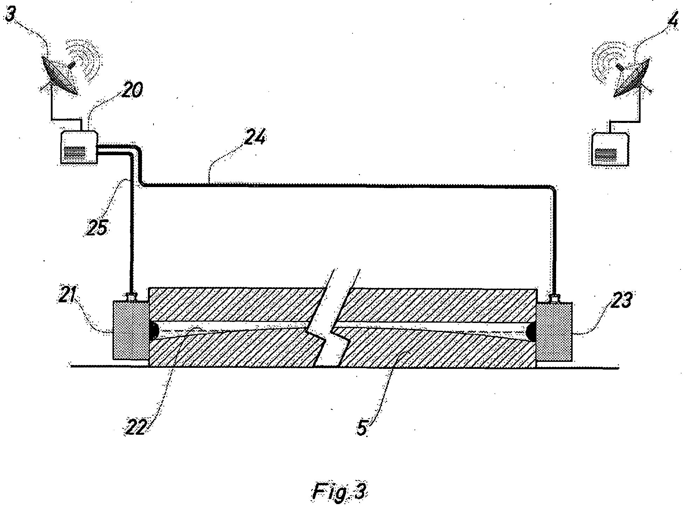

Figures 2 and 3 show the radio-frequency transceiver device (3) connected to a controller (20), the radio-frequency receiver device (4) and, in greater detail, the sensor device (5).

The sensor device (5) comprises a generator, which in this particular case is an infrared light generator (21), a detector (23) of the emitted infrared light, and a rubber strip along which longitudinal opening the infrared light beam (22) passes. The collision detection method in the door of this particular embodiment works by sending a beam of infrared light along the strip (5). When the door collides with an obstacle the strip (5) is deformed (see Figure 3), preventing the light from passing between the generator and the detector. In this way it is detected if the door is exerting a force against an obstacle or if it can continue moving.

In the present invention, the output signal from the sensor device is fed back, permitting greater diagnostic capability, since what generally happens in conventional devices is that a fault in the generator can be erroneously interpreted as a collision. For this purpose, a connection (25) is made between the controller (20) and the emitter (21) and there is feedback (24) between the receiver (23) and the controller (20), which compares whether the signal sent by the emitter (21) is the one received by the receiver (23), identifying whether it is a signal caused by deformation of the strip (5) or a signal produced by some fault in the sensor device.

Based on the result of this comparison, the control panel identifies whether to actuate the motor to continue closing the door, whether to stop it because a collision has taken place or whether a fault has occurred in the system. In particular embodiments of the present invention, the communication between the stationary receiver (4) and the radio-frequency transceiver (3) can be bidirectional.

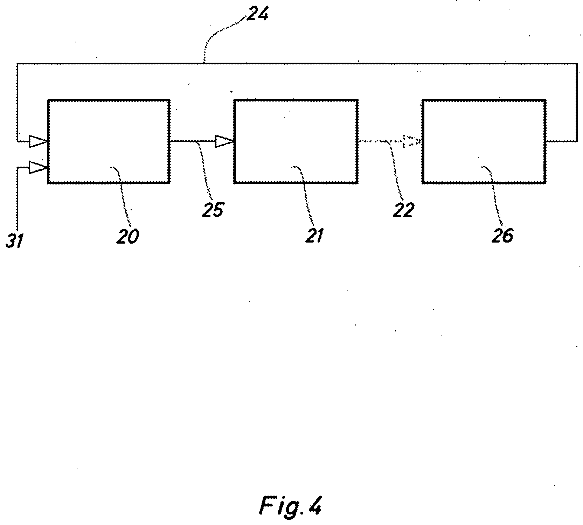

Figure 4 shows diagrammatically the internal behaviour of the sensor device. This figure illustrates the communication between the controller (20), the emitter (21) via a connection (25) and also a connection between the emitter (21) and the receiver (26) via a beam of infrared light (22) and the feedback (24) of data obtained to the controller (20) for subsequent analysis.

Another important aspect of the present invention is the ability to improve the energy efficiency of the system, since it permits to have a trigger signal (31) to indicate to the controller when it must have the emitter (20) to send a signal. In a preferred embodiment of the present invention the triggering takes place at a constant frequency, although this could depend on external factors such as an RF signal coming from a stationary radio-frequency emitter (not shown).

In addition to the signals for signal emission, triggering, and notification of receipt of signal by the receiver, the controller can incorporate power supply connections both to the emitter and the receiver, switching off the devices when there is no trigger signal and, once this signal is received, activating the devices; later, when the signal has already been sent by the receiver it switches them off again.

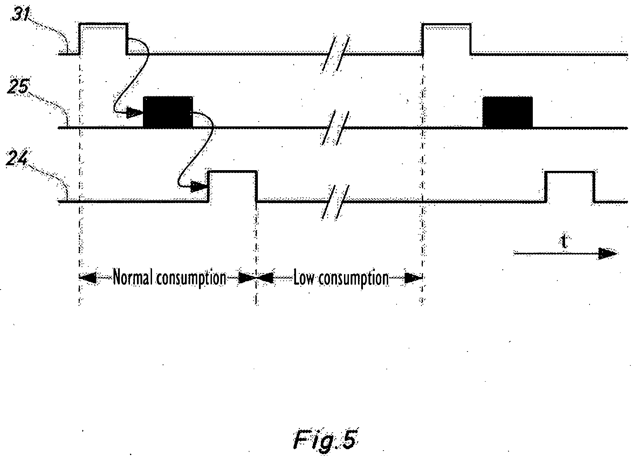

Figure 5 shows diagrammatically the signals produced in the device, showing which signals are generated in the device when it is activated via a trigger signal (31).

As shown in the figure, a pulse is provided as a trigger signal (31) that sends to the emitter, via a connection (25), a signal that said emitter sends to the receiver, in this particular case, via infrared light beams. Once the receiver receives this signal, it feeds it back to the controller via a connection (24) so that said controller can analyse the signal received and identify whether said signal indicates that the door has collided, whether the process is ongoing, or whether it is due to a fault in one of the devices comprised in the system.

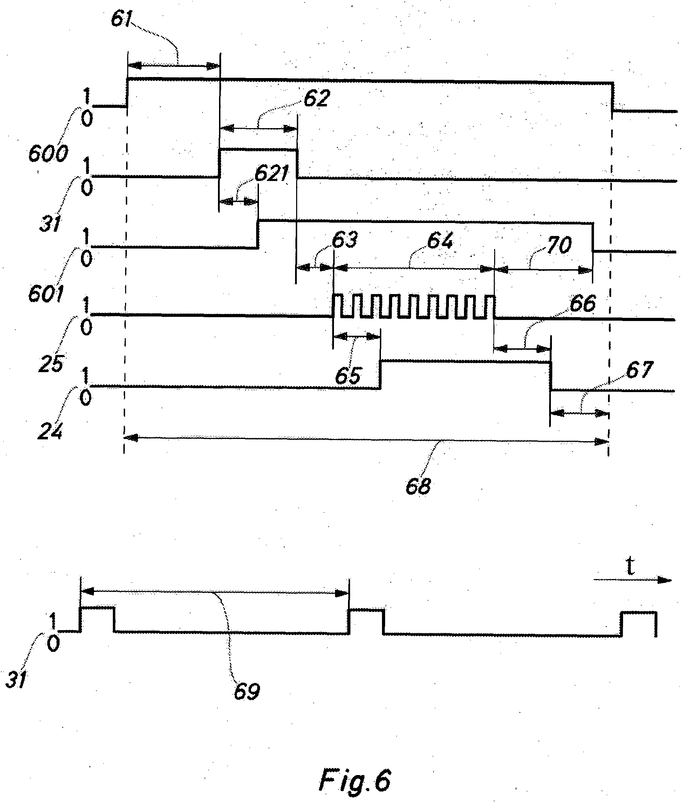

Figure 6 shows, as a whole, the signals between some of the devices in one embodiment of the present invention.

The signal (600) refers to the power consumption of the system; it can be seen that there is a time interval (61) between the moment when the controller decides to start sending a signal and when the trigger signal (31) is generated. In the preferred embodiment described in Figure 6, the trigger signal is a pulse signal with a given actuation time (62).

After the emission of the pulse, which works as a trigger signal, some time (621) passes until the signal reaches the emitter, which changes its status from passive mode (low power consumption) to active mode (normal power consumption).

Subsequently, some time (63) after the emitter changes from passive to active mode, a signal (25) is sent, in this particular example an infrared signal, for a given time (64); once this signal is sent and some time (70) later, the emitter returns to passive mode.

This signal (25) can be a constant signal or a series of pulses, as indicated in the figure.

Furthermore, the receiver receives the signal (24) sent by the emitter with a time lag (65), (66) afterwards, and sends this signal as feedback; once this feedback reaches the controller again, i.e. some time (67) later, the system returns to a low power-consumption mode, or passive mode.

As indicated in previous sections, in the present invention the trigger signal can be a signal defined by means of other devices forming part of the system or can be a signal generated repetitively with a time period (69).

Although the invention has been described in relation to preferred exemplary embodiments, these should not be considered to restrict the invention, which is to be defined by the broadest interpretation of the following claims.

## Claims

1. Automatic door system having a safety sensor device for a door provided with a motor and a control panel associated with said motor, comprising:
- a stationary wireless signal receiver (4) connected to the control panel;
- at least one sensor device (5) located at the moveable end of the door;
- at least one controller (20) for the sensor device, communicating wirelessly with the stationary receiver (4);
the sensor device (5) being a safety strip and comprising:
- an optical signal emitter (21); and
- a receiver (23) for the optical signal generated by the emitter (21);
**characterised in that** - the controller (20) generates a trigger signal (31) to activate the emitter (21) to send a signal to the receiver for detecting collisions
- and **in that** during the operation of the automatic door,
- the receiver (23) feeds said signal to the controller (20) via a connection (24) once the signal is received by the receiver (23),
- the controller (20) switches off both the emitter (21) and the receiver (23), after the signal has already been sent by the receiver (23),
- the trigger signal (31) is generated periodically at configurable time intervals,
- so that said trigger signal (31) is a signal independent from the signal to be emitted by the emitter (21).

2. System according to claim 1, **characterised in that** the controller (20) is provided outside the sensor device (5).

3. System according to any one of the preceding claims, **characterised in that** both the emitter (21) and the receiver (23) are connected to the controller (20).

4. System according to any one of the preceding claims, **characterised in that** the controller (20) activates the receiver (23) via the trigger signal (31).

5. System according to any one of the preceding claims, **characterised in that** the electrical supply to the emitter (21) comes from the controller (20).

6. System according to any one of the preceding claims, **characterised in that** the electrical supply to the receiver (23) comes from the controller (20).

7. System according to any one of the preceding claims, **characterised in that** the emitter (21) is a generator of a polarised light beam.

8. System according to Claim 7, **characterised in that** the polarised light beam is an infrared light beam.

9. System according to any one of the preceding claims, **characterised in that** the controller (20) comprises a radio-frequency emitter operating in the ISM band.

10. System according to Claim 9, **characterised in that** the radio-frequency emitter operates in the 870 MHz frequency.

11. System according to any one of the preceding claims, **characterised in that** both the sensor device (5) and the controller (20) are supplied with power by batteries.

12. System according to any one of the preceding claims, **characterised in that** both the stationary wireless signal receiver (4) and the controller (20) comprise transceivers.

13. System according to any one of the preceding claims, **characterised in that** said controller (20) is configured to analyse the signal received and identify whether said signal indicates that the door has collided, whether the process is ongoing, or whether if is due to a fault in one of the devices comprised in the system.

14. Method for operating an automatic door system according to claim 1, having a safety sensor device for a door provided with a motor and a control panel associated with said motor, said automatic door system comprising:
- a stationary wireless signal receiver (4) connected to the control panel;
- at least one sensor device (5) located at the moveable end of the door;
- at least one controller (20) for the sensor device (5), communicating wirelessly with the stationary receiver (4);
the sensor device (5) being a safety strip and comprising:
- an optical signal emitter (21); and
- a receiver (23) for the optical signal generated by the emitter (21);
comprising the steps of
a) emission of a signal by the emitter (21) to the receiver (23);
b) detection of the signal received by the receiver (23); and
c) emission of a signal from the sensor device (5) according to the signal received by the receiver (23);
**characterised in that**,
- before step a), the controller (20) sends a trigger signal (31) to the emitter (21) causing the emitter (21) to send a signal to the receiver (23) for detecting collisions,
- the receiver (23) feeds said signal to the controller (20) via a connection (24) once the signal is received by the receiver (23),
- the controller (20) switches off both the emitter (21) and the receiver (23), after the signal has already been sent by the receiver (23),
- the trigger signal (31) is generated periodically at configurable time intervals.

15. Method according to Claim 14, **characterised in that** it comprises a step e) in which, if the controller (20) does not receive the feedback signal, it sends a fault signal.

16. Method according to any one of Claims 14 to 15, **characterised in that** the controller (20) sends the trigger signal after receiving a signal from outside.

17. Method according to any one of Claims 14 to 16 **characterised in that** said controller (20) is configured to analyse the signal received and identify whether said signal indicates that the door has collided, whether the process is ongoing, or whether if is due to a fault in one of the devices comprised in the system.

## Patentansprüche

1. Automatisches Türsystem mit einer Sicherheitssensorvorrichtung für eine Tür, die mit einem Motor sowie einer mit dem Motor verbundenen Steuerkonsole versehen ist, wobei das automatische Türsystem folgendes umfasst:
- Einen ortsfesten Funksignalempfänger (4), der mit der Steuerkonsole verbunden ist;
- mindestens eine Sensorvorrichtung (5), die am beweglichen Ende der Tür angeordnet ist;
- mindestens eine Steuerung (20) für die Sensorvorrichtung, welche drahtlos mit dem ortsfesten Empfänger (4) kommuniziert;
wobei die Sensorvorrichtung (5) eine Sicherheitsleiste ist und folgendes umfasst:
- Einen optischen Signalsender (21); und
- einen Empfänger (23) für das vom Sender (21) erzeugte optische Signal;
**dadurch gekennzeichnet, dass**
- die Steuerung (20) ein Triggersignal (31) zur Aktivierung des Senders (21) erzeugt, so dass dieser ein Signal an den Empfänger sendet zur Erkennung von Kollisionen;
- und dass während des Betriebs der Türautomatik der Empfänger (23) besagtes Signal über eine Verbindung (24) der Steuerung (20) einspeist, sobald das Signal vom Empfänger (23) empfangen wird;
- die Steuerung (20) sowohl den Sender (21) als auch den Empfänger (23) abschaltet, nachdem das Signal bereits vom Empfänger (23) gesendet wurde;
- das Triggersignal (31) periodisch zu konfigurierbaren Zeitintervallen erzeugt wird;
- so dass das Triggersignal (31) ein von dem vom Sender (21) zu sendenden Signal unabhängiges Signal ist.

2. System nach Anspruch 1, **dadurch gekennzeichnet, dass** die Steuerung (20) außerhalb der Sensorvorrichtung (5) vorgesehen ist.

3. System nach einem der voranstehenden Ansprüche, **dadurch gekennzeichnet, dass** sowohl der Sender (21) als auch der Empfänger (23) mit der Steuerung (20) verbunden sind.

4. System nach einem der voranstehenden Ansprüche, **dadurch gekennzeichnet, dass** die Steuerung (20) den Empfänger (23) über das Triggersignal (31) aktiviert.

5. System nach einem der voranstehenden Ansprüche, **dadurch gekennzeichnet, dass** die Stromversorgung an den Sender (21) über die Steuerung (20) erfolgt.

6. System nach einem der voranstehenden Ansprüche, **dadurch gekennzeichnet, dass** die Stromversorgung an den Empfänger (23) über die Steuerung (20) erfolgt.

7. System nach einem der voranstehenden Ansprüche, **dadurch gekennzeichnet, dass** der Sender (21) ein Erzeuger eines polarisierten Lichtstrahls ist.

8. System nach Anspruch 7, **dadurch gekennzeichnet, dass** der polarisierte Lichtstrahl ein Infrarotlichtstrahl ist.

9. System nach einem der voranstehenden Ansprüche, **dadurch gekennzeichnet, dass** die Steuerung (20) ein im ISM-Band arbeitender RF-Sender ist.

10. System nach Anspruch 9, **dadurch gekennzeichnet, dass** der RF-Sender im 870 MHz-Frequenzbereich arbeitet.

11. System nach einem der voranstehenden Ansprüche, **dadurch gekennzeichnet, dass** die Stromversorgung sowohl der Sensorvorrichtung (5) als auch der Steuerung (20) durch Batterien erfolgt.

12. System nach einem der voranstehenden Ansprüche, **dadurch gekennzeichnet, dass** sowohl der ortsfeste Funksignalempfänger (4) als auch die Steuerung (20) Transceiver umfassen.

13. System nach einem der voranstehenden Ansprüche, **dadurch gekennzeichnet, dass** die Steuerung (20) derart konfiguriert ist, dass sie das empfangene Signal analysiert und bestimmt, ob das Signal anzeigt, dass an der Tür eine Kollision stattgefunden hat, ob der Vorgang noch andauert, oder ob das Ganze auf einen Fehler in einer der Vorrichtungen im System zurückzuführen ist.

14. Verfahren zum Betrieb eines automatischen Türsystems nach Anspruch 1 mit einer Sicherheitssensorvorrichtung für eine Tür, die mit einem Motor und einer mit dem Motor verbundenen Steuerkonsole versehen ist, wobei das automatische Türsystem folgendes umfasst:
- Einen ortsfesten Funksignalempfänger (4), der mit der Steuerkonsole verbunden ist;
- mindestens eine Sensorvorrichtung (5), die am beweglichen Ende der Tür angeordnet ist;
- mindestens eine Steuerung (20) für die Sensorvorrichtung (5), welche drahtlos mit dem ortsfesten Empfänger (4) kommuniziert;
wobei die Sensorvorrichtung (5) eine Sicherheitsleiste ist und folgendes umfasst:
- Einen optischen Signalsender (21); und
- einen Empfänger (23) für das vom Sender (21) erzeugte optische Signal;
wobei das Verfahren folgende Schritte umfasst:
a) Senden eines Signals durch den Sender (21) an den Empfänger (23);
b) Erkennen des vom Empfänger (23) empfangenen Signals; und
c) Senden eines Signals von der Sensorvorrichtung (5) gemäß dem vom Empfänger (23) empfangenen Signal;
**dadurch gekennzeichnet, dass**
- vor Schritt a) die Steuerung (20) ein Triggersignal (31) an den Sender (21) sendet, das den Sender (21) dazu veranlasst, ein Signal an den Empfänger (23) zur Erkennung von Kollisionen zu senden,
- der Empfänger (23) dieses Signal über eine Verbindung (24) der Steuerung (20) einspeist, sobald das Signal vom Empfänger (23) empfangen wird;
- die Steuerung (20) sowohl den Sender (21) als auch den Empfänger (23) abschaltet, nachdem das Signal bereits vom Empfänger (23) gesendet wurde,
- das Triggersignal (31) periodisch zu konfigurierbaren Zeitintervallen erzeugt wird.

15. Verfahren nach Anspruch 14, **dadurch gekennzeichnet, dass** es einen Schritt e) umfasst, bei dem, falls die Steuerung (20) das Feedbacksignal nicht empfängt, diese ein Störungssignal sendet.

16. Verfahren nach einem der Ansprüche 14 bis 15, **dadurch gekennzeichnet, dass** die Steuerung (20) das Triggersignal nach Empfang eines Signals von außen sendet.

17. Verfahren nach einem der Ansprüche 14 bis 16, **dadurch gekennzeichnet, dass** die Steuerung (20) derart konfiguriert ist, dass sie das empfangene Signal analysiert und bestimmt, ob das Signal anzeigt, dass an der Tür eine Kollision stattgefunden hat, ob der Vorgang noch andauert, oder ob das Ganze auf einen Fehler in einer Vorrichtungen im System zurückzuführen ist.

## Revendications

1. Système de porte automatique ayant un dispositif capteur de sécurité pour une porte munie d'un moteur et d'un panneau de commande associé avec ledit moteur, comprenant :
- un récepteur (4) de signal sans fil stationnaire connecté au panneau de commande ;
- au moins un dispositif capteur (5) logé à l'extrémité déplaçable de la porte ;
- au moins un contrôleur (20) pour le dispositif capteur, communiquant sans fil avec le récepteur (4) stationnaire ;
le dispositif capteur (5) étant une bande de sécurité et comprenant :
- un émetteur de signal optique (21) ; et
- un récepteur (23) pour le signal optique généré par l'émetteur (21) ;
**caractérisé en ce que**
- le contrôleur (20) génère un signal de déclenchement (31) pour activer l'émetteur (21) qui envoie un signal au récepteur pour détecter des collisions
- et **en ce que** pendant le fonctionnement de la porte automatique,
- le récepteur (23) fournit ledit signal au contrôleur (20) par l'intermédiaire d'une connexion (24) une fois que le signal est reçu par le récepteur (23),
- le contrôleur (20) commute à l'arrêt l'un et l'autre de l'émetteur (21) et du récepteur (23), après que le signal a déjà été envoyé par le récepteur (23),
- le signal de déclenchement (31) est généré de façon périodique à des intervalles de temps configurables,
- de telle sorte que le signal de déclenchement (31) est un signal indépendant du signal devant être émis par l'émetteur (21).

2. Système selon la revendication 1, **caractérisé en ce que** le contrôleur (20) est prévu à l'extérieur du dispositif capteur (5).

3. Système selon l'une quelconque des revendications précédentes, **caractérisé en ce que** l'un et l'autre de l'émetteur (21) et du récepteur (23) sont connectés au contrôleur (20).

4. système selon l'une quelconque des revendications précédentes, **caractérisé en ce que** le contrôleur (20) active le récepteur (23) par l'intermédiaire du signal de déclenchement (31).

5. Système selon l'une quelconque des revendications précédentes, **caractérisé en ce que** l'alimentation électrique de l'émetteur (21) provient du contrôleur (20).

6. Système selon l'une quelconque des revendications précédentes, **caractérisé en ce que** l'alimentation électrique du récepteur (23) provient du contrôleur (20).

7. Système selon l'une quelconque des revendications précédentes, **caractérisé en ce que** l'émetteur (21) est un générateur de faisceau de lumière polarisée.

8. Système selon la revendication 7, **caractérisé en ce que** le faisceau de lumière polarisée est un faisceau de lumière infrarouge.

9. Système selon l'une quelconque des revendications précédentes, **caractérisé en ce que** le contrôleur (20) comprend un émetteur radiofréquence fonctionnant dans la bande ISM.

10. Système selon la revendication 9, **caractérisé en ce que** l'émetteur radiofréquence fonctionne à la fréquence de 870 MHz.

11. Système selon l'une quelconque des revendications précédentes, **caractérisé en ce que** l'un et l'autre du dispositif capteur (5) et du contrôleur (20) sont alimentés en puissance par des piles.

12. Système selon l'une quelconque des revendications précédentes, **caractérisé en ce que** l'un et l'autre du récepteur (4) de signal sans fil stationnaire et du contrôleur (20) comprennent des émetteurs-récepteurs.

13. Système selon l'une quelconque des revendications précédentes, **caractérisé en ce que** ledit contrôleur (20) est configuré pour analyser le signal reçu et pour identifier si ledit signal indique que la porte est entrée en collision, si le fonctionnement se poursuit, ou si le signal est dû à un défaut de l'un des dispositifs compris dans le système.

14. Procédé pour faire fonctionner un système de porte automatique selon la revendication 1 ayant un dispositif capteur de sécurité pour une porte munie d'un moteur et d'un panneau de commande associé avec ledit moteur, ledit système de porte automatique comprenant
- un récepteur (4) de signal sans fil stationnaire connecté au panneau de contrôle ;
- au moins un dispositif capteur (5) logé à l'extrémité déplaçable de la porte ;
- au moins un contrôleur (20) pour le dispositif capteur (5), communiquant sans fil avec le récepteur (4) stationnaire ;
le dispositif capteur (5) étant une bande de sécurité et comprenant :
- un émetteur de signal optique (21) ; et
- un récepteur (23) pour le signal optique généré par l'émetteur (21) ;
comprenant les étapes de
a) émission d'un signal par l'émetteur (21) vers le récepteur (23) ;
b) détection du signal reçu par le récepteur (23) ; et
c) émission d'un signal par le dispositif capteur (5) en fonction du signal reçu par le récepteur (23) ;
**caractérisé en ce que**,
- avant l'étape a), le contrôleur (20) envoie à l'émetteur (21) un signal de déclenchement (31) provoquant l'envoi d'un signal par l'émetteur (21) au récepteur (23) pour détecter des collisions,
- le récepteur (23) envoie ledit signal au contrôleur (20) par l'intermédiaire d'une connexion (24) une fois que le signal est reçu par le récepteur (23),
- le contrôleur (20) commute à l'arrêt l'un et l'autre de l'émetteur (21) et du récepteur (23) après que le signal a déjà été envoyé par le récepteur (23),
- le signal de déclenchement (31) est généré de façon périodique à des intervalles de temps configurables.

15. Procédé selon la revendication 14, **caractérisé en ce qu'**il comprend une étape e) dans laquelle, si le contrôleur (20) ne reçoit pas le signal de retour, il envoie un signal de défaut.

16. Procédé selon l'une quelconque des revendications 14 à 15, **caractérisé en ce que** le contrôleur (20) envoie le signal de déclenchement après avoir reçu un signal provenant de l'extérieur.

17. Procédé selon l'une quelconque des revendications 14 à 16 **caractérisé en ce que** ledit contrôleur (20) est configuré pour analyser le signal reçu et pour identifier si ledit signal indique que la porte est entrée en collision, si le fonctionnement se poursuit, ou si le signal est dû à un défaut dans l'un des dispositifs compris dans le système.
